# EUROPÄISCHE PATENTSCHRIFT

(11) **EP 1 963 697 B1**
(45) Veröffentlichungstag und Bekanntmachung des Hinweises auf die Patenterteilung: **26.11.2014**
(21) Anmeldenummer: 06818121.3
(22) Anmeldetag: 08.12.2006
(51) Int. Cl.: F16C 33/78, F16J 15/32

(54) **RADIALLAGER MIT EINER KASSETTENDICHTUNG, SOWIE KASSETTENDICHTUNG**
RADIAL BEARING HAVING A CASSETTE SEAL, AND CASSETTE SEAL
PALIER RADIAL DOTE D'UN JOINT D'ÉTANCHÉITÉ A CASSETTE ET JOINT D'ÉTANCHÉITÉ À CASSETTE

(30) Priorität: 21.12.2005 DE 102005061168
(43) Veröffentlichungstag der Anmeldung: 03.09.2008
(73) Patentinhaber: Schaeffler Technologies GmbH & Co. KG, 91074 Herzogenaurach (DE)
(72) Erfinder: WALTER, Wilhelm, 97490 Poppenhausen (DE)
(86) Internationale Anmeldenummer: PCT/DE2006/002186
(87) Internationale Veröffentlichungsnummer: WO 2007/071230

(56) Entgegenhaltungen:
- DE-A1- 3 806 928
- DE-A1- 10 056 175
- DE-A1- 19 916 934

## Beschreibung

### Gebiet der Erfindung

Die Erfindung betrifft eine Kassettendichtung für ein Radiallager, bei dem das Radiallager einen Innenring und einen Außenring sowie dazwischen angeordnete Wälzkörper aufweist, und bei dem die Kassettendichtung axial neben den Wälzkörpern zwischen dem Innenring und dem Außenring in einem Presssitz angeordnet ist, wobei die Kassettendichtung einen Träger, eine daran befestigte Dichtung und einen Winkelblechring aufweist, an dem Dichtlippen der Dichtung anliegen. Zudem betrifft die Erfindung ein Verfahren zur Montage einer solchen Kassettendichtung in einem Radiallager.

### Hintergrund der Erfindung

Wälzlager mit Kassettendichtungen sind seit vielen Jahrzehnten bekannt.

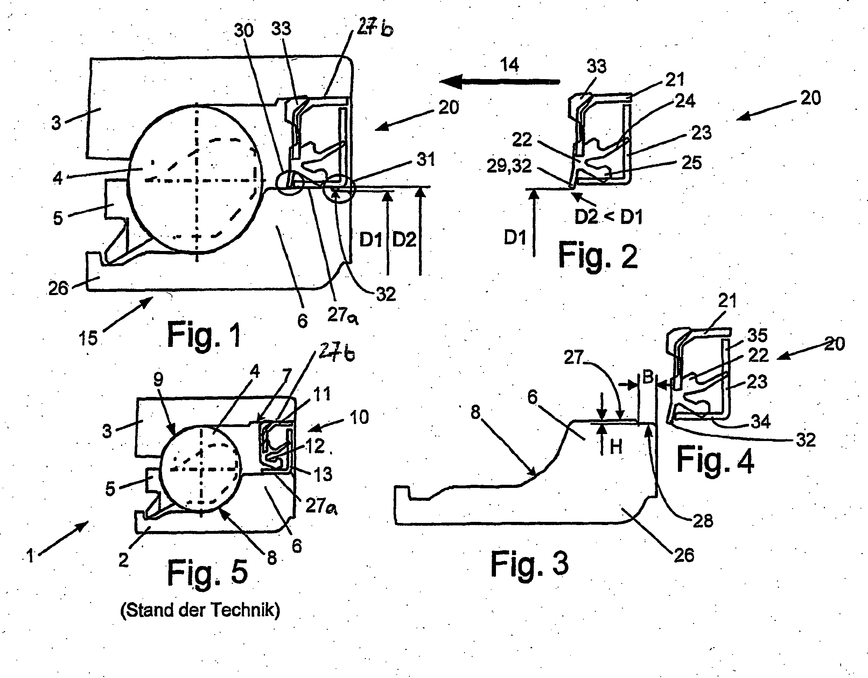

Fig. 5 veranschaulicht an einem als Schrägkugellager 1 ausgebildeten Wälzlager das Lager an sich sowie die dort in einen Presssitz an der Welle sowie an der Gehäusebohrung eingefügte Kassettendichtung 10.

Das Schrägkugellager 1 besteht im Wesentlichen aus einem Innenring 2 und einem Außenring 3, zwischen denen z.B. als Kugeln 4 ausgebildete Wälzkörper in Laufbahnen 8 und 9 beweglich angeordnet sind. Die Kugeln 4 sind in einem Käfig 5 aufgenommen, der am Innenring 2 in einer nicht näher bezeichneten Ringnut eingeschnappt ist.

Zur Übertragung von Axialkräften zwischen dem Innenring 2 und dem Außenring 3 sind an diesen beiden Lagerringen Borde 6 ausgebildet.

Zur Abdichtung des Wälzlagers 1 ist zwischen dem Innenring 2 und dem Außenring 3 die Kassettendichtung 10 in dem Presssitz 27a am Innenring 2 und in dem Presssitz 27b am Außenring 3 eingepresst, welcher am Außenring 3 als ringförmiger Absatz 7 ausgebildet ist.

Die Kassettendichtung 10 besteht im Wesentlichen aus einem am Außenring angeordneten Träger 11 und einer an dem Träger 11 befestigten elastomeren Dichtung 12 (elastomerer Bereich), wodurch dort bzw. im Bereich der Gehäusebohrung eine statische Dichtung erzielt wird, sowie einem am Innenring angeordneten Winkelblechring 13, wodurch dort bzw. im Bereich der Welle nur eine metallische Pressverbindung erzielt wird.

Der Winkelblechring 13 dient als Lauffläche für zwei Lippen der Dichtung 12.

Die drei Bauteile Träger 1, Dichtung 12 und Winkelblechring 13 sind vor der Montage zwischen dem Innenring 2 und dem Außenring 3 zu der genannten Kassettendichtung 10 zusammengefügt worden.

Eine solche bekannte Kombination von Wälzlager 1 und Kassettendichtung 10 ist zur Vermeidung des Eindringens von Partikeln und Feuchtigkeit in das Wälzlager mit besonderer Sorgfalt herzustellen. Besondere Beachtung findet dabei die formgenaue Herstellung des Winkelblechringes 13, der möglichst formschlüssig auf der Radialfläche des Bords 6 des Innenringes 2 sitzen muss (27a).

Ein solcher Winkelblechring 13 wird heute üblicherweise in einem Tlefziehvorgang hergestellt.

Liegt eine ungewollt große Abweichung zwischen der Geometrie des Lagerinnenrings 2 und des Winkelblechringes 13 am Presssitz 27a vor, so kann es im Betrieb eines solchen Lagers 1 dazu kommen, dass aufgrund von Druckdifferenzen im Lager 1 Feuchtigkeit in dasselbe gelangt, welches dort zu Korrosion und letztlich zum vorzeitigen Lagerausfall führen kann.

Um derartige Betriebsschäden zu vermeiden, sind die Radialflächen am (metallischen) Presssitz 27a des Lagerinnenrings 2 sowie des Winkelblechrings 13 sehr sorgfältig und mit geringen Tolleranzen gefertigt, welches nicht unerheblichen Kosten verursacht.

Aus DE 100 56 175 A1 sind Kassettendichtungen für Radlager bekannt, die sowohl statische Dichtungen zwischen einem Winkelblech und einem Innenring oder Außenring vorsehen. Ebenso werden radiale Dichtlippen gelehrt, die sowohl auf dem zylindrischen Teil des Winkelblechs anliegen können oder auch direkt auf dem Innenring.

Aus DE 38 06 928 A1 sind Kassettendichtungen für Radlager bekannt, die sowohl statische Dichtungen zwischen einem Winkelblech und einem Innenring oder Außenring des Lagers vorsehen.

In DE 199 16 934 A1 werden radiale Dichtlippen in Kassendichtungen gelehrt, die sowohl auf dem zylindrischen Teil des Winkelblechs anliegen kön nen oder auch direkt auf dem Innenring des Lagers. Der Oberbegriff des Anspruchs 1 ist aus dieser Schrift bekannt.

### Aufgabe der Erfindung

Der Erfindung liegt daher die Aufgabe zugrunde, ein Radiallager mit einer Kassettendichtung vorzuschlagen, welches bei zumindest gleicher Dichtwirkung preisgünstiger herstellbar ist als bekannte gattungsgemäße Vorrichtungen. Dieses Radiallager mit Kassettendichtung soll auch als Radlager für Kraftfahrzeuge nutzbar sein.

### Zusammenfassung der Erfindung

Der Erfindung liegt die Erkenntnis zugrunde, dass im Bereich der (metallischen) Pressverbindung, wie hier entsprechend der Ausgestaltung der Kassettendichtung beispielsweise am Innenring bzw. an der Welle, eine zusätzliche statisch wirkende Abdichtung des Radiallagers im Bereich der Kassettendichtung deren Dichtwirkung derartig verbessern kann, dass der Lagerringbord und/oder der Winkelblechring mit reduzierten geometrischen Genauigkeitsanforderungen kostengünstig herstellbar sind.

Die Erfindung betrifft eine Kassettendichtung als selbstständig herstellbare und handelbare Einheit, mit einem Träger, einer an dem Träger befestigte Dichtung, einer an der Dichtung ausgebildete Dichtlippe und einem Winkelblechring, wobei die Dichtlippe im Wesentlichen radial nach Innen weist und einen Durchmesser D1 hat, der kleiner ist als der Innendurchmesser D2 eines axialen Schenkels des Winkelblechringes, sowie radial nicht auf diesem axialen Schenkel aufliegt. Erfindungsgemäß liegt diese Dichtlippe an dem stirnseitigen Ende des axialen Schenkel des Winkelblechringes an. Im montierten Zustand liegt diese Dichtlippe zudem auf der Radialfläche eines Lagerringes des Radiallagers an.

Des weiteren betrifft die Erfindung ein Radiallager mit einer solchen Kassettendichtung, bei dem das Radiallager einen Innenring und einen Außenring sowie dazwischen angeordnete Wälzkörper aufweist, und bei dem die Kassettendichtung axial neben den Wälzkörpern zwischen dem Innenring und dem Außenring in einem Presssitz angeordnet ist, wobei die Kassettendichtung einen Träger, eine daran befestigte Dichtung und einen Winkelblechring aufweist, an dem Dichtlippen der Dichtung anliegen.

Außerdem ist gemäß der Erfindung vorgesehen, dass zwischen dem Winkelblechring und dem Lagerring, insbesondere gemäß einer entsprechenden Ausgestaltung der Kassendichtung hier dem Lagerinnenring, ein (zusätzliches) Dichtmittel angeordnet ist.

Dieses zusätzliche Dichtmittel wirkt demnach als statisches Dichtmittel, da es nur Kontakt zu relativ zueinander nicht drehenden Bauteilen von Lager und Dichtkassette hat, wie dies bei dem Lagerring und dem dort durch Presssitz angeordneten Winkelblechring der Fall ist.

Wenn auch im Weiteren hier insbesondere eine zusätzliche statische Abdichtung durch das zusätzliche Dichtmittel am Innenring beschrieben wird, so ist dies entsprechend für den Fall einer zusätzlichen Abdichtung durch das zusätzliche Dichtmittel am Außenring - im Falle eines dortigen Presssitzes des Winkelblechrings - mit umfasst und Gegenstand der Erfindung.

Diese statische Abdichtung verhindert auch bei geometrisch weniger exakt und damit kostengünstiger hergestellten Winkelblechring bzw. Lageringbord sicher den Eintritt von Feuchte in das Lager, wenn beispielsweise Druckdifferenzen im Lager auftreten.

Das Dichtmittel ist bevorzugt in einem ringförmigen radialen Absatz in dem mit dem Winkelblechring zusammenwirkenden Lagerring angeordnet, wobei dieser Lagerring je nach Ausbildung der Kassettendichtung der Lagerinnenring oder der Lageraußenring, bevorzugt der Lagerinnenring, sein kann.

Die Erfindung sieht vor, dass die Dichtung wenigstens eine Dichtlippe, insbesondere eine zu den vorgenannten Dichtlippen zusätzliche Dichtlippe, aufweist, welche im Lager weitgehend radial nach innen zu der Drehachse des Lagers weist und vorzugsweise an einer radialen Fläche eines Lagerringes, insbesondere des Lagerinnenrings, und/oder an der Stirnfläche eines axialen Schenkels des Winkelblechringes anliegt.

Ferner ist erfindungsgemäß vorgesehen, dass die radial nach innen weisende und auf dem Lagerring, insbesondere auf dem Lagerinnenring, aufliegende Dichtlippe einen geringeren Durchmesser D1 aufweist, als der Innendurchmesser D2 des axialen Schenkels des Winkelblechrings.

Nach einem anderen Merkmal weist die auf dem Lagerring aufliegende Dichtlippe einen geringeren Durchmesser D1 auf, als der Durchmesser D2 des Presssitzes dieses Lagerrings.

Dabei ist das nur mit relativ zueinander nicht drehenden Bauteilen in Kontakt stehende Dichtmittel durch ein bei dem Einpressen der Kassettendichtung in das Radiallager abgetrenntes radiales Ende der Dichtlippe gebildet. Durch dieses Merkmal der Erfindung kann vorteilhaft auf eine gesonderte Herstellung eines diesbezüglichen Dichtmittels sowie auf eine separate Montage desselben am Lager verzichtet werden.

Eine weitere Ausgestaltung der Erfindung sieht vor, dass die Dichtung dreilippig ausgebildet ist, mit der beschriebenen zusätzlichen Dichtlippe, mit einer an der Innenseite eines radialen Schenkels des Winkelblechringes anliegenden zweiten Dichtlippe, und mit einer an der Innenseite des axialen Schenkels des Winkelblechringes anliegenden dritten Dichtlippe.

Es ist zur Erzielung einer noch weiter verbesserten Dichtwirkung der Kassettendichtung gemäß der Erfindung auch möglich, dass an dem Träger eine weitere Dichtlippe, insbesondere eine elastomere Dichtlippe und/oder zur statischen Abdichtung am Gehäuse, angeordnet ist, die am jeweils zugeordneten Lagerring, insbesondere am Lageraußenring (3) radial anliegt (elastomerer Bereich).

Zudem ist bevorzugt vorgesehen, dass der erwähnte ringförmige Absatz zur Aufnahme des zusätzlichen und aus dem abgetrennten radialen Ende der ersten Dichtlippe gebildeten Dichtmittels ein Verhältnis von radialer Höhe H zu axialer Breite B im Bereich von 0,05 zu 1, oder 0,1 zu 1, oder 0,02 zu 1, insbesondere jedoch 0,15 zu 1 aufweist.

Außerdem sei angemerkt, dass der mehrfach erwähnte Lagerring, an dem der ringförmige Absatz ausgebildet ist, als Innenring oder als Außenring, besonderes bevorzugt als Lagerinnenring, ausgebildet ist.

Welcher der beiden Lagerringe aber mit dem ringförmigen Absatz versehen ist, hängt im Wesentlichen von der geometrischen Ausbildung der Kassettendichtung ab, insbesondere davon, in welche radiale Richtung die erste Dichtlippe mit ihrem abtrennbaren freien Ende in der Kassettendichtung bzw. im Lager ausgerichtet ist.

### Kurze Beschreibung der Zeichnungen

Die Erfindung wird im Folgenden anhand der beiliegenden Zeichnungen an einigen Ausführungsformen näher erläutert. Darin zeigt
- Fig. 1: eine schematische Querschnittdarstellung eines Schrägkugellagers mit einer Kassettendichtung gemäß der Erfindung,
- Fig. 2: die Kassettendichtung gemäß Fig. 1 in einer Detaildarstellung,
- Fig. 3: den Innenring des Schrägkugellagers gemäß Fig. 1 vor dem Zusammenfügen mit der Kassettendichtung gemäß Fig. 2,
- Fig. 4: die Kassettendichtung vor dem Zusammenfügen mit dem Innenring, und
- Fig. 5: ein Schrägkugellager mit einer Kassettendichtung gemäß dem Stand der Technik.

### Detaillierte Beschreibung der Zeichnungen

Fig. 1 zeigt demnach ein als Schrägkugellager ausgebildetes Radiallager 15, welches weitgehend wie das an sich bekannte und einleitend beschriebene Radiallager 1 gemäß Fig. 5 aufgebaut ist. Bei diesem Radiallager 15 sind daher Kugeln 4 in einem Käfig 5 aufgenommen und zwischen einem Innenring 26 und einem Außenring 3 drehbar angeordnet. Der Innenring 26 weist einen Bord 6 auf, der zur Aufnahme einer Kassettendichtung 20 (durch Presssitz 27a) dient.

Wie insbesondere die Figuren 2 und 4 verdeutlichen, weist diese Kassettendichtung 20 einen Träger 21 für eine daran befestigte Dichtung 22 auf, die hier dreilippig ausgebildet ist. Zur Kassettendichtung 20 gehört auch ein Winkelblechring 23, mit dem die Kassettendichtung 20 auf dem Innenring 26 durch den Presssitz 27a befestigt wird.

Der Winkelblechring 23 weist einen axialen Schenkel 34 und einen radialen Schenkel 35 auf, an deren zur Dichtung 22 weisenden Innenseiten die Dichtlippen 24 und 25 anliegen. Das freie Ende des radialen Schenkels 35 weist zu einem axial ausgerichteten Abschnitt des Trägers 21, zwischen denen ein nicht näher bezeichneter axialer Spalt ausgebildet ist und welcher axial ausgerichtete Abschnitt des Trägers 21 durch Presssitz 27b am Außenring 3 angeordnet ist.

Auf der axial anderen Seite des Trägers 21 ist eine an deren radialen Ende vergleichsweise dick ausgebildete elastomere Dichtlippe 33 der Dichtung 22 angeordnet, welche sich radial an dem Außenring 3 abstützt und welche eine statische Abdichtung zum Gehäuse ausbildet (elastomerer Bereich).

Von besonderer Bedeutung im Zusammenhang mit der Erfindung ist nun die radial in Richtung zum Innenring 26 weisende Dichtlippe 29, die ein radiales Ende 32 hat. Die Dichtlippe 29 weist einen Durchmesser D1 auf, der kleiner ist als der Innendurchmesser D2 des axialen Schenkels 34 des Winkelblechringes 23 bzw, des Presssitzes 27a des Innenringes 26.

Zudem ist für die Wirkungsweise des Radiallagers 15 auch vorgeshen, dass der Innenring 26 am wälzkörperfernen Ende seines Bords 6 einen ringförmigen Absatz 28 aufweist (Fig. 3). Dieser Absatz ist vergleichsweise klein ausgebildet und hat ein Verhältnis seiner radialen Höhe H zu seiner axialen Breite B von 0,05 zu 1, oder 0,1 zu 1, oder 0,02 zu 1, insbesondere jedoch von 0,15 zu 1. Vorzugsweise ist der Innendurchmesser dieses Absatzes 28 identisch mit dem Durchmesser der Dichtlippe 29.

Wie die Zusammenschau der Figuren 3 und 4 verdeutlicht, ist der Durchmesser D1 des radialen Endes 32 der Dichtlippe 29, der Durchmessers des axialen Schenkels 34 des Winkelblechringes 23 und die Höhe H bzw. der Innendurchmesser des ringförmigen Absatzes 28 am Innenring 26 so aufeinander abgestimmt, dass bei einem Einführen der Kassettendichtung 20 in den Aufnahmebereich zwischen den Innenring 26 und den Außenring 3 gemäß dem Pfeil 14 das radiale Ende 32 der Dichtlippe 29 in dem ringförmigen Absatzes 28 zunächst unbeschadet aufgenommen wird.

Da die Dichtlippe 29 mit ihrem radialen Ende 32 an der freien Stirnseite des axialen Schenkels 34 des Winkelblechringes 23 anliegt, wird dieses radiale Ende 32 bei einem weiteren Einführen bzw. Einpressen der Kassettendichtung 20 zwischen Innenring 26 und Außenring 3 des Lagers 15 durch den axialen Schenkel 34 des Winkelblechringes 23 abgetrennt und verbleibt als (zusätzliches) statisches Dichtmittel 32 in dem durch den Innenring 26 und dem axialen Schenkel 34 des Winkelblechrings 23 gebildeten ringförmigen Dichtspalt. Hierzu wird auf die Details 30 und 32 in Fig. 1 hingewiesen.

Das Zusammenwirken der genannten konstruktiven Merkmale des Radiallagers 15 und der Kassettendichtung 20 führt zu einem sehr wirkungsvoll abgedichteten Radiallager, welches hinsichtlich seiner Einzelteile und seiner Montage kostengünstig, beispielsweise als Radlager für Kraftfahrzeuge herstellbar ist.

Die Erfindung betrifft die Kassettendichtung 20 an sich, welche ein Produkt sein kann, das ein Lagerhersteller als Zulieferteil von einem anderen Hersteller beziehen kann. Diese Kassettendichtung 20 weist insbesondere einen Träger 21, eine an dem Träger 21 befestigte Dichtung 22 mit einer Dichtlippe 29 und einen Winkelblechring 23 auf, wobei die Dichtlippe 29 im Wesentlichen radial nach Innen in Richtung zu der Aufnahmeöffnung für einen Lagerring 26 weist und einen Durchmesser D1 hat, der kleiner ist als der Innendurchmesser D2 eines axialen Schenkels 34 des Winkelblechringes 23. Die Dichtlippe 29 liegt dabei nicht auf dem axialen Schenkel 34 auf, sondern vorzugsweise an dessen stirnseitigem Ende an.

Shließlich betrifft die Erfindung auch ein Verfahren zur Montage einer solchen Kassettendichtung in einem Radiallager.

### Bezugszeichenliste

- 1: Radiallager, Schrägkugellager
- 2: Innenring
- 3: Außenring
- 4: Wälzkörper, Kugel
- 5: Käfig
- 6: Bord am Innenring
- 7: Absatz am Außenring
- 8: Wälzkörperlaufbahn
- 9: Wälzkörperlaufbahn
- 10: Kassettendichtung
- 11: Träger
- 12: Dichtung
- 13: Winkelblechring
- 14: Pfeil, Montagerichtung
- 15: Radiallager mit Kassettendichtung gemäß der Erfindung
- 20: Kassettendichtung
- 21: Träger
- 22: Dichtung
- 23: Winkelblechring
- 24: Dichtlippe
- 25: Dichtlippe
- 26: Innenring
- 27a: Presssitz am Innenring bzw. im Bereich der Welle
- 27b: Presssitz am Außenring bzw. im Bereich des Gehäuses
- 28: Ringförmiger Absatz
- 29: Dichtlippe (für zusätzliche statische Abdichtung)
- 30: Detail
- 31: Detail
- 32: Radiales Ende der Dichtlippe 29; Dichtmittel
- 33: statische Abdichtung, elastomerer Bereich
- 34: Axialer Schenkel des Winkelblechrings
- 35: Radialer Schenkel des Winkelblechrings
- B: Breite des Absatzes
- H: Höhe des Absatzes
- D1: Durchmesser der Dichtlippe 29; Innendurchmesser des Absatzes 28
- D2: Durchmesser des Presssitzes; Innendurchmesser des Winkelblechrings

## Patentansprüche

1. Kassettendichtung (20) für ein Radiallager (15), mit einem Träger (21) und mit einer an dem Träger befestigten Dichtung (22), sowie mit einer an der Dichtung (22) ausgebildeten Dichtlippe (29) und mit einem Winkelblechring (23), wobei die Dichtlippe (29) im Wesentlichen radial nach innen weist und einen Durchmesser (D1) hat, der kleiner ist als der Innendurchmesser (D2) eines axialen Schenkels (34) des Winkelblechringes (23), sowie radial nicht auf dem axialen Schenkel (34) aufliegt, **dadurch gekennzeichnet, dass** die Dichtlippe (29) mit einem radialen Ende (32) an der Stirnseite des axialen Schenkels (34) des Winkelbleches (23) anliegt.

2. Radiallager (15) mit einer Kassettendichtung (20) nach Anspruch 1, bei dem das Radiallager (15) einen Innenring (26) und einen Außenring (3) sowie dazwischen angeordnete Wälzkörper (4) aufweist, und bei dem die Kassettendichtung (20) axial neben den Wälzkörpern (4) zwischen dem Innenring (26) und dem Außenring (3) in einem Presssitz angeordnet ist, wobei zwischen dem Winkelblechring (23) und dem Lagerring (26) ein Dichtmittel (32) angeordnet ist.

3. Radiallager nach Anspruch 2, **dadurch gekennzeichnet, dass** das Dichtmittel (32) in einem mit dem Winkelblechring (23) zusammenwirkenden ringförmigen radialen Absatz (28) im Lagerring, insbesondere im Lagerinnenring (26), angeordnet ist.

4. Radiallager nach wenigstens einem der Ansprüche 1 bis 3, **dadurch gekennzeichnet, dass** die Dichtung (22) dreilippig (24, 25, 29) ausgebildet ist, mit der Dichtlippe (29), mit einer an der Innenseite eines radialen Schenkels (35) des Winkelblechringes (23) anliegenden Dichtlippe (24), und mit einer an der Innenseite des axialen Schenkels (34) des Winkelblechringes (23) anliegenden Dichtlippe (25).

5. Radiallager nach wenigstens einem der Ansprüche 1 bis 3, **dadurch gekennzeichnet, dass** an dem Träger (11) eine weitere Dichtlippe (33), insbesondere zur statischen Abdichtung am Gehäuse, angeordnet ist, die am jeweils zugeordneten Lagerring, insbesondere am Lageraußenring (3) radial anliegt.

6. Radiallager nach wenigstens einem der Ansprüche 1 bis 5, **dadurch gekennzeichnet, dass** der ringförmige Absatz (28) ein Verhältnis von radialer Höhe (H) zu axialer Breite (B) im Bereich von 0,05 zu 1, oder 0,1 zu 1 oder 0,02 zu 1, insbesondere jedoch 0,15 zu 1 aufweist.

7. Radiallager nach wenigstens einem der Ansprüche 1 bis 8, **dadurch gekennzeichnet, dass** der Lagerring als Innenring (26) oder als Außenring (3) ausgebildet ist.

8. Montage einer Kassettendichtung (20) in einem Radiallager (15), wobei die Kassettendichtung (20) einen Träger (21) und eine an dem Träger befestigte Dichtung (22) aufweist, sowie mit einer an der Dichtung (22) ausgebildeten Dichtlippe (29) und mit einem Winkelblechring (23) versehen ist, wobei die Dichtlippe (29) im Wesentlichen radial nach innen weist und einen Durchmesser (D1) aufweist, der kleiner ist als der Innendurchmesser (D2) eines axialen Schenkels (34) des Winkelblechrings (23), wobei die Dichtlippe (29) radial nicht auf dem axialen Schenkel (34) aufliegt, sondern mit einem radialen Ende an der Stirnseite des axialen Schenkels des Winkelblechs anliegt, wobei das Radiallager (15) einen Innenring (26) und einen Außenring (3), sowie dazwischen angeordnete Wälzkörper (4) aufweist, wobei die Kassettendichtung (20) axial neben den Wälzkörpern (4) zwischen dem Innenring (26) und dem Außenring (3) in einem Presssitz angeordnet wird und zwischen dem Winkelblechring (23) und dem Lagerring (26) ein Dichtmittel (32) angeordnet wird, **dadurch gekennzeichnet, dass** das Dichtmittel (32) durch ein bei der Montage der Kassettendichtung (20) in das Radiallager (15) abgetrenntes radiales Ende der Dichtlippe (29) der Dichtung (22) gebildet wird.

## Claims

1. Cassette seal (20) for a radial bearing (15), having a carrier (21) and having a seal (22) that is fastened to the carrier and also having a sealing lip (29) formed on the seal (22) and having a sheet-metal angle ring (23), the sealing lip (29) pointing substantially radially inward and having a diameter (D1) which is smaller than the inside diameter (D2) of an axial leg (34) of the sheet-metal angle ring (23) and not lying radially on the axial leg (34), **characterized in that** the sealing lip (29) bears, by way of one radial end (32), against the end face of the axial leg (34) of the sheet-metal angle ring (23).

2. Radial bearing (15) having a cassette seal (20) according to Claim 1, in which the radial bearing (15) has an inner ring (26) and an outer ring (3) and also rolling bodies (4) arranged between them, and in which the cassette seal (20) is arranged axially next to the rolling bodies (4) between the inner ring (26) and the outer ring (3) in a press fit, a sealing means (32) being arranged between the sheet-metal angle ring (23) and the bearing ring (26).

3. Radial bearing according to Claim 2, **characterized in that** the sealing means (32) is arranged in an annular radial step (28) in the bearing ring, in particular in the bearing inner ring (26), said step cooperating with the sheet-metal angle ring (23).

4. Radial bearing according to at least one of Claims 1 to 3, **characterized in that** the seal (22) is of three-lip design (24, 25, 29), with the sealing lip (29), with a sealing lip (24) bearing against the inside of a radial leg (35) of the sheet-metal angle ring (23), and with a sealing lip (25) bearing against the inside of the axial leg (34) of the sheet-metal angle ring (23).

5. Radial bearing according to at least one of Claims 1 to 3, **characterized in that** a further sealing lip (33), in particular for static sealing off on the housing, is arranged on the carrier (11) and bears radially in each case against the assigned bearing ring, in particular against the bearing outer ring (3).

6. Radial bearing according to at least one of Claims 1 to 5, **characterized in that** the annular step (28) has a ratio of radial height (H) to axial width (B) in the region of 0.05 to 1 or 0.1 to 1 or 0.02 to 1, but, in particular, of 0.15 to 1.

7. Radial bearing according to at least one of Claims 1 to 6, **characterized in that** the bearing ring is designed as an inner ring (26) or as outer ring (3).

8. Mounting of a cassette seal (20) in a radial bearing (15), the cassette seal (20) having a carrier (21) and having a seal (22) that is fastened to the carrier and also being provided with a sealing lip (29) formed on the seal (22) and with a sheet-metal angle ring (23), the sealing lip (29) pointing substantially radially inward and having a diameter (D1) which is smaller than the inside diameter (D2) of an axial leg (34) of the sheet-metal angle ring (23), the sealing lip (29) not lying radially on the axial leg (34) but bearing, by way of one radial end, against the end face of the axial leg of the sheet-metal angle ring, the radial bearing (15) having an inner ring (26) and an outer ring (3) and also rolling bodies (4) arranged between them, the cassette seal (20) being arranged axially next to the rolling bodies (4) between the inner ring (26) and the outer ring (3) in a press fit, and a sealing means (32) being arranged between the sheet-metal angle ring (23) and the bearing ring (26), **characterized in that** the sealing means (32) is formed by a radial end of the sealing lip (29) of the seal (22), said radial end being separated when the cassette seal (20) is mounted into the radial bearing (15).

## Revendications

1. Joint d'étanchéité à cassette (20) pour un palier radial (15), comprenant un support (21) et un joint d'étanchéité (22) fixé au support, et comprenant une lèvre d'étanchéité (29) réalisée sur le joint d'étanchéité (22) et une bague en tôle coudée (23), la lèvre d'étanchéité (29) étant tournée essentiellement radialement vers l'intérieur et présentant un diamètre (D1) inférieur au diamètre intérieur (D2) d'une branche axiale (34) de la bague en tôle coudée (23), et ne reposant pas radialement sur la branche axiale (34), **caractérisé en ce que** la lèvre d'étanchéité (29) s'applique avec une extrémité radiale (32) contre le côté frontal de la branche axiale (34) de la tôle coudée (23).

2. Palier radial (15) comprenant un joint d'étanchéité à cassette (20) selon la revendication 1, dans lequel le palier radial (15) présente une bague interne (26) et une bague externe (3) ainsi que des corps de roulement (4) disposés entre celles-ci, et dans lequel le joint d'étanchéité à cassette (20) est disposé axialement à côté des corps de roulement (4) entre la bague interne (26) et la bague externe (3) avec un ajustement serré, un moyen d'étanchéité (32) étant disposé entre la bague en tôle coudée (23) et la bague de palier (26).

3. Palier radial selon la revendication 2, **caractérisé en ce que** le moyen d'étanchéité (32) est disposé dans un épaulement radial (28) de forme annulaire coopérant avec la bague en tôle coudée (23) dans la bague de palier, en particulier dans la bague interne de palier (26).

4. Palier radial selon au moins l'une quelconque des revendications 1 à 3, **caractérisé en ce que** le joint d'étanchéité (22) est réalisé avec trois lèvres (24, 25, 29), la lèvre d'étanchéité (29), une lèvre d'étanchéité (24) s'appliquant contre le côté interne d'une branche radiale (35) de la bague en tôle coudée (23) et une lèvre d'étanchéité (25) s'appliquant contre le côté interne de la branche axiale (34) de la bague en tôle coudée (23).

5. Palier radial selon au moins l'une quelconque des revendications 1 à 3, **caractérisé en ce qu'**une lèvre d'étanchéité supplémentaire (33), en particulier pour l'étanchéité statique au niveau du boîtier, est disposée sur le support (11), laquelle lèvre d'étanchéité supplémentaire s'applique radialement contre la bague de palier respectivement associée, en particulier contre la bague externe de palier (3).

6. Palier radial selon au moins l'une quelconque des revendications 1 à 5, **caractérisé en ce que** l'épaulement de forme annulaire (28) présente un rapport de la hauteur radiale (H) à la largeur axiale (B) de l'ordre de 0,05 à 1, ou de 0,1 à 1 ou de 0,02 à 1, en particulier toutefois de 0,15 à 1.

7. Palier radial selon au moins l'une quelconque des revendications 1 à 6, **caractérisé en ce que** la bague de palier est réalisée sous forme de bague interne (26) ou sous forme de bague externe (3).

8. Montage d'un joint d'étanchéité à cassette (20) dans un palier radial (15), le joint d'étanchéité à cassette (20) présentant un support (21) et un joint d'étanchéité (22) fixé au support, et étant pourvu d'une lèvre d'étanchéité (29) réalisée sur le joint d'étanchéité (22) et d'une bague en tôle coudée (23), la lèvre d'étanchéité (29) étant tournée essentiellement radialement vers l'intérieur et présentant un diamètre (D1) inférieur au diamètre intérieur (D2) d'une branche axiale (34) de la bague en tôle coudée (23), la lèvre d'étanchéité (29) ne reposant pas radialement sur la branche axiale (34) mais s'appliquant avec une extrémité radiale contre le côté frontal de la branche axiale de la tôle coudée, le palier radial (15) présentant une bague interne (26) et une bague externe (3), ainsi que des corps de roulement (4) disposés entre celles-ci, le joint d'étanchéité à cassette (20) étant disposé axialement à côté des corps de roulement (4) entre la bague interne (26) et la bague externe (3) avec un ajustement serré, et un moyen d'étanchéité (32) étant disposé entre la bague en tôle coudée (23) et la bague de palier (26), **caractérisé en ce que** le moyen d'étanchéité (32) est formé par une extrémité radiale de la lèvre d'étanchéité (29) du joint d'étanchéité (22) séparée lors du montage du joint d'étanchéité à cassette (20) dans le palier radial (15).
